# FASCICULE DE BREVET EUROPEEN

(11) **EP 3 971 616 B1**
(45) Date de publication et mention de la délivrance du brevet: **09.04.2025**
(21) Numéro de dépôt: 21195822.8
(22) Date de dépôt: 09.09.2021
(51) Int. Cl.: G01S 19/21

(54) **PROCÉDÉ DE TRAITEMENT D'UN SIGNAL DE RADIONAVIGATION ISSU D'AU MOINS UN SATELLITE**
VERFAHREN ZUR VERARBEITUNG EINES FUNKNAVIGATIONSSIGNALS, DAS VON MINDESTENS EINEM SATELLITEN AUSGEHT
METHOD FOR PROCESSING A RADIO-NAVIGATION SIGNAL FROM AT LEAST ONE SATELLITE

(30) Priorité: 21.09.2020 FR 2009481
(43) Date de publication de la demande: 23.03.2022
(73) Titulaire: Safran Electronics & Defense, 75015 Paris (FR)
(72) Inventeur: LILBERT, Arnaud, 77550 MOISSY-CRAMAYEL (FR); FOREST, Vincent, 77550 MOISSY-CRAMAYEL (FR)
(74) Mandataire: Regimbeau

(56) Documents cités:
- CN-B- 102 944 884
- FR-A1- 3 038 391
- JIANG Z ET AL: "Mitigation of Narrow-band Interference on Software Receivers Based on Spectrum Analysis", GNSS 2004 - PROCEEDINGS OF THE 17TH INTERNATIONAL TECHNICAL MEETING OF THE SATELLITE DIVISION OF THE INSTITUTE OF NAVIGATION (ION GNSS 2004), THE INSTITUTE OF NAVIGATION, 8551 RIXLEW LANE SUITE 360 MANASSAS, VA 20109, USA, 24 September 2004 (2004-09-24), pages 144 - 155, XP056009129
- YANG ET AL: "Frequency-Domain GPS Baseband Processor Design And Initial Test Results", GPS 2001 - PROCEEDINGS OF THE 14TH INTERNATIONAL TECHNICAL MEETING OF THE SATELLITE DIVISION OF THE INSTITUTE OF NAVIGATION (ION GPS 2001), THE INSTITUTE OF NAVIGATION, 8551 RIXLEW LANE SUITE 360 MANASSAS, VA 20109, USA, 14 September 2001 (2001-09-14), pages 2859 - 2870, XP056009046

## Description

### DOMAINE TECHNIQUE GENERAL

L'invention concerne le positionnement par satellites et concerne notamment un procédé et un dispositif de traitement de signaux dans un système de positionnement par satellites.

### ETAT DE LA TECHNIQUE

Dans les systèmes de positionnement par satellite ou GNSS (pour en anglais, « Global Navigation Satellite System ») (GPS, GLONASS, etc.) la tenue aux interférences est un élément primordial des performances de ces systèmes. En effet, ces interférences limitent la précision de la localisation obtenue.

En particulier, les récepteurs de positionnement par satellites mettent en œuvre une corrélation entre un signal de mesure (issu d'une constellation de satellites) (ci-après signal GNSS) et un signal de réplique et des traitements permettant de réduire des interférences dans le signal de mesure avant qu'il ne soit corrélé avec le signal de réplique. Ces traitements sont généralement appelés : traitements pré-corrélatifs d'élimination d'interférences.

Ces interférences ont généralement pour cause un émetteur radio d'un système tiers, émettant un signal radio dans une bande de fréquences identique à la bande de fréquences dans laquelle le signal GNSS est émis. Cette émission est par exemple due au fait que des filtres d'émission de l'émetteur radio du système tiers ne permettent pas de rejeter suffisamment le signal émis par l'émetteur radio du système tiers dans les bandes de fréquences adjacentes à la bande de fréquences d'émission du signal.

Pour supprimer les interférences dans le signal GNSS reçu, on met classiquement en œuvre des traitements permettant de supprimer dans le domaine fréquentiel des interférences contenues dans une bande de fréquences étroites et filtrer le signal GNSS dans le domaine temporel pour atténuer le signal GNSS dans la ou les bandes de fréquences dans lesquelles la présence d'interférences est probable (on utilise pour ce faire un filtre coupe bande). Les documents FR 3 038 391 A1 et Yang et al. : « Frequency-Domain GPS Baseband Processor Design AND Initial Test Results », GPS 2001 - Proc. Of the 14th International Technical Meeting of the Satellite Division of the Institute of Navigation (ION GPS 2001), The Institute of Navigation, 8551 Rixlew Lane Suite 360 Manassas, VA 20109, USA, 14 septembre 2001, pages 2859-2870 décrivent des procédés de traitement de signaux de radionavigation pour en réduire les interférences.

Le filtrage coupe-bande est réalisé généralement par un filtre dont la réponse impulsionnelle est de durée finie : filtre FIR (en anglais, « *Finite Impulse Response filter* »). Ce filtre comprend généralement 64 coefficients ou plus.

Suite à la suppression des interférences il est connu de transposer en fréquence le signal de localisation. Cette transposition en fréquence est généralement réalisée afin de transposer le signal de localisation d'une première bande de fréquences dite bande transposée à une deuxième bande de fréquences dite bande de base. Généralement la bande de base est centrée autour de la fréquence nulle. Cette transposition est habituellement réalisée dans le domaine temporel. Cette transposition met en œuvre plusieurs traitements dont un traitement de filtrage qui là encore utilise un filtre à plusieurs coefficients.

Ainsi, le filtrage des interférences et la conversion en bande de base nécessitent d'importantes ressources en calculs. Ces ressources importantes conduisent à une surconsommation en ressources pour le traitement du signal GNSS. Ce risque de surconsommation concerne des composants numériques programmables de type FPGA (en anglais, « *Field-Programmable Gate Array* ») pour lesquels les ressources sont limitées.

### PRESENTATION DE L'INVENTION

L'invention permet de traiter un signal GNSS en utilisant moins de ressources numériques que les traitements présentés ci-dessus.

A cet effet, l'invention propose, selon un premier aspect, un procédé de traitement d'un signal de radionavigation issu d'au moins un satellite, ledit procédé comprenant les étapes suivantes mises en œuvre dans une unité de traitement d'un récepteur de radionavigation :
- conversion du signal de radionavigation dans le domaine fréquentiel au moyen d'une transformée de Fourier de manière à obtenir un signal de radionavigation fréquentiel comprenant plusieurs composantes fréquentielles ;
- traitement du signal de radionavigation fréquentiel de manière à traiter au moins une composante fréquentielle dite composante interférente, ladite composante ainsi traitée ayant été soit atténuée soit annulée ;

- filtrage du signal fréquentiel numérique ainsi traité au moyen d'un filtre coupe-bande pour obtenir un signal de radionavigation fréquentiel filtré ;
- transposition en fréquence du signal de radionavigation fréquentiel filtré afin d'obtenir un signal de radionavigation fréquentiel en bande de base ;
- conversion du signal de radionavigation fréquentiel en bande de base au moyen d'une transformée de Fourier inverse de manière à obtenir un signal de radionavigation en bande de base temporel dans lequel des interférences ont été atténuées/supprimées.

L'invention, selon le premier aspect, est avantageusement complétée par les caractéristiques suivantes, prises seules ou en une quelconque de leur combinaison techniquement possible :
- le traitement visant à obtenir un signal de radionavigation fréquentiel traité comprend une excision de fréquence ;
- le filtrage du signal fréquentiel traité consiste à annuler l'amplitude de composantes fréquentielles excisées associées à des fréquences appartenant à une bande de fréquence à filtrer.
- la transposition en fréquence est réalisée par décalage des composantes du signal fréquentiel numérique filtré autour de la fréquence 0Hz.
- le signal de radionavigation étant découpé en une pluralité de blocs d'échantillons ; les étapes de conversion au moyen de la transformée de Fourier discrète, de traitement, de filtrage, de transposition et de conversion au moyen de transformée de Fourier discrète inverse sont réalisées indépendamment pour chaque bloc d'échantillons du signal de radionavigation afin d'obtenir des blocs d'échantillons du signal temporel en bande de base dont une ou plusieurs composantes fréquentielles ont été traitées.

L'invention concerne selon un deuxième aspect, un récepteur de radionavigation comprenant une unité de réception configurée pour obtenir un signal de radionavigation, ledit récepteur comprenant une unité de traitement configurée pour mettre en œuvre un procédé selon le premier aspect de l'invention.

L'invention concerne selon un troisième aspect, un aéronef comprenant un récepteur selon le deuxième aspect de l'invention.

L'invention concerne selon un quatrième aspect, un produit programme d'ordinateur comprenant des instructions de code de programme pour l'exécution des étapes d'un procédé le premier aspect de l'invention, lorsque ce programme est exécuté par un ordinateur.

Les avantages de l'invention sont multiples :
- simplification des opérations numériques
- amélioration de la performance du traitement du signal et réduction des ressources numériques nécessaires
- réduction de la consommation des composants numériques, allégeant ainsi la puissance des alimentations
- limitation de l'espace occupé sur le dispositif réalisant le traitement, ce qui permet l'ajout de fonctions supplémentaires
- utilisation de FPGA de plus petite taille, il n'est donc pas nécessaire de redimensionner des FPGAS existants.
- remplacement du filtrage et de la conversion en bande de base dans le domaine temporel par un filtrage et une conversion dans le domaine fréquentiel.

Le procédé de traitement de l'invention nécessite 3000 bascules, 3000 tables de correspondance (en anglais, « LookUp Table » (LUT)), aucun DSP pour être implémenté alors que les procédés connus nécessitent 40 000 bascules, 17 000 tables de correspondances et 350 DSP. Les ressources nécessaires sont donc réduites. En effet, la Demanderesse s'est aperçue que les traitements dans le domaine

fréquentiel utilisaient moins de ressources que dans le domaine temporel compte tenu du fait que les traitements dans le domaine fréquentiel sont plus simples que ceux mis en œuvre dans le domaine temporel.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre un récepteur de signaux issus d'un satellite selon l'invention ;
- la figure 2 un procédé de traitement de signaux issus d'un satellite selon l'invention ;
- la figure 3 illustre un spectrogramme d'un signal de radionavigation fréquentiel de l'invention ;
- la figure 4 illustre un exemple de filtrage par un filtre coupe-bande selon un aspect de l'invention ;
- la figure 5 illustre un filtrage sur le signal fréquentiel traité de l'effet du filtrage et de la transposition de l'invention.

### DESCRIPTION DETAILLEE

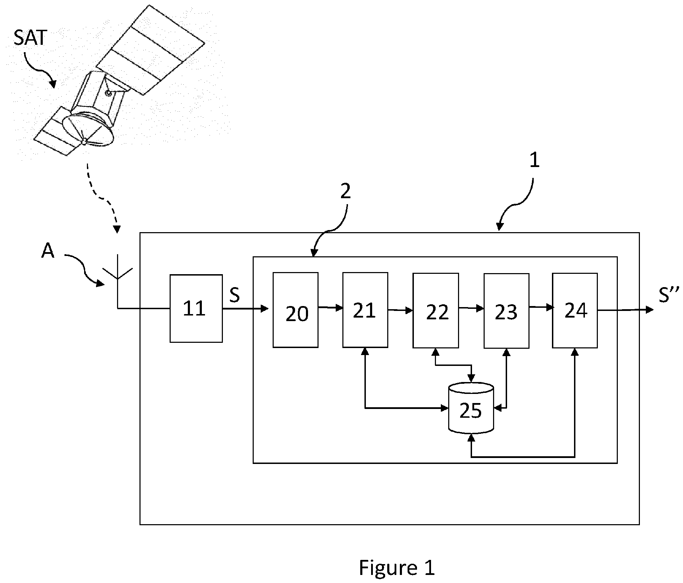

La figure 1 illustre un récepteur 1 de radionavigation (ci-après récepteur GNSS) comprenant une unité de réception 11 configurée pour acquérir un signal de radionavigation (ci-après signal GNSS) issu d'au moins un satellite SAT par exemple de type GPS ou GLONASS et le convertir en un signal GNSS numérique. L'unité de réception 11 comprend notamment une antenne A, un amplificateur faible bruit (en anglais, « *Low Noise Amplifier*», (LNA)) et un convertisseur analogique numérique (non représenté) pour obtenir un signal numérique S en sortie de l'unité de réception 11. L'unité de réception 11 comprend d'autres éléments qui ne seront pas décrits plus en détails car bien connus de l'homme du métier.

Le récepteur 1 peut être intégré dans un aéronef (non représenté). Dans ce cas, le récepteur est connecté avec un autre dispositif permettant de faire l'interface avec l'aéronef, par exemple un dispositif de gestion des différentes phases du vol de l'aéronef.

Le récepteur 1 GNSS comprend une unité de traitement 2 à laquelle l'unité de réception 11 communique le signal GNSS numérisé S (ci-après le signal GNSS). L'unité de traitement 2 est constituée par un ou plusieurs processeurs qui permettent de mettre en œuvre différents traitements.

L'unité de traitement 2 comprend un module 20 de découpage du signal GNSS en blocs d'échantillons de taille prédéterminée.

L'unité de traitement 2 comprend un convertisseur 21 temps/fréquence configuré pour convertir le signal GNSS dans le domaine fréquentiel, le signal GNSS étant dans le domaine temporel. En particulier, le convertisseur 21 permet d'appliquer une transformée de Fourrier discrète complexe (TFD, pour Transformée de Fourier Discrète).

A la suite du convertisseur 21, le récepteur 1 comprend un module de traitement des interférences 22 configuré pour mettre en œuvre un certain nombre de traitement sur le signal fréquentiel issu du convertisseur 21. Ces étapes seront détaillées plus loin. Ce module 22 fournit un signal fréquentiel dans lequel les interférences ont été traitées à un convertisseur 23 fréquence/temps qui est configuré pour convertir ce signal dans le domaine temporel. En particulier, le convertisseur 22 permet d'appliquer une transformée de Fourrier discrète complexe inverse à celle appliquée par le convertisseur 21.

Ce signal temporel est alors fourni une unité de corrélation 24 qui permet d'appliquer des traitements au signal temporel pour fournir le signal de navigation S" comme connu par l'homme du métier.

L'unité de traitement 2 comprend également une mémoire 25 qui permet de stocker des signaux au cours des différents traitements.

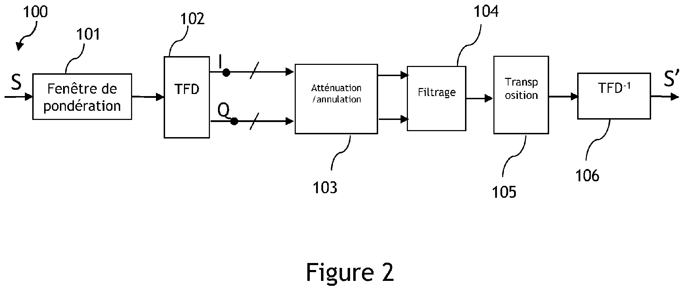

La figure 2 illustre des étapes d'un procédé de traitement de signaux GNSS issus d'un satellite mis en œuvre par l'unité de traitement 2.

En premier lieu, un signal issu d'un satellite est reçu et numérisé par le récepteur 1 (étape 100) pour obtenir le signal GNSS noté S.

Le signal GNSS numérisé S comprenant un signal utile émis par le satellite SAT, un bruit blanc gaussien et des interférences à éliminer est d'abord fenêtré (étape 101) et découpé par blocs de plusieurs échantillons sur lequel une TFD complexe (étape 102) est appliquée pour obtenir un signal fréquentiel.

Le fenêtrage a pour effet de limiter la diffusion spectrale issue de la TFD complexe et liée à la troncature temporelle. Un exemple de fenêtrage est de type Blackman-Harris. A l'issue de la TFD complexe, le signal fréquentiel comprend N échantillons d'indices 1 à N, N étant un multiple de 2, par exemple 256 ≤ N ≤ 1024.

S'agissant d'une TFD complexe, le signal fréquentiel comprend une partie réelle (composante en phase I) et une partie imaginaire (composante en quadrature Q). En outre, le signal comprend N échantillons décrivant la partie réelle (notés Iᵢ, i=1 à N) et N échantillons décrivant la partie imaginaire (notés Qᵢ).

Le signal fréquentiel comprend plusieurs composantes fréquentielles, chacune caractérisée par une amplitude et une phase et associée à une fréquence.

Le traitement des interférences (étape 103) consiste à traiter dans le signal fréquentiel au moins une composante affectée par les interférences. Si on connait les fréquences des interférences on peut annuler, dans le signal fréquentiel, l'amplitude des composantes associées aux fréquences des interférences. Si on ne connait pas les fréquences des interférences on peut annuler l'amplitude des composantes dont l'amplitude dépasse un seuil d'excision.

Ce seuil d'excision dépend en particulier de la variance du bruit thermique. Également, il est possible d'atténuer seulement une ou plusieurs composantes fréquentielles.

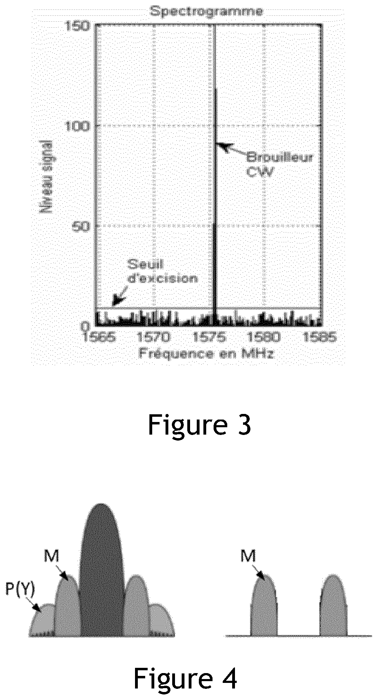

La figure 3 illustre l'amplitude des composantes fréquentielles du signal fréquentiel en fonction de la fréquence. Sur cette figure, le signal fréquentiel présente une interférence provoquée par un brouilleur de type fréquence pure (en anglais, « *Continuous Waveforme* », (CW)). Cette interférence, présente sur un nombre restreint de fréquences, dépasse un seuil d'excision donc l'amplitude des composantes associés à ces fréquences est annulée. Les interférences sur le signal fréquentiel peuvent aussi être obtenues d'autres manières connues de l'homme du métier.

Ici les composantes fréquentielles dont le niveau dépasse le seul d'excision sont annulées. Le seuil d'excision est en général obtenu par calcul d'une fonction de répartition des niveaux des composantes du signal fréquentiel, le seuil correspondant au niveau à partir duquel la fonction de réparation s'annule la première fois moyennant une marge.

Le signal fréquentiel numérique pour lequel les interférences ont été traitées correspond au signal fréquentiel initial dans lequel une ou plusieurs composantes fréquentielles ont été annulées ou atténuées. Chaque composante atténuée ou annulée ayant été caractérisée par une amplitude et une phase.

Le signal fréquentiel atténué est alors filtré au moyen d'un filtre coupe bande. Un filtre coupe-bande est aussi appelé filtre réjecteur de bande ou filtre cloche. Le filtre coupe-bande permet outre les composantes fréquentielles annulées ou atténuées de supprimer ou atténuer dans une bande de fréquences l'amplitude des composantes d'un signal dans cette bande de fréquences. Ce filtrage est réalisé par annulation de l'amplitude des composantes associées à des fréquences appartenant à la bande de fréquences à filtrer.

La largeur de la bande de fréquences qui peut être traitée prend un nombre limité de valeurs discrètes. La différence minimale entre deux largeurs possibles est appelée sélectivité en fréquence. Cette sélectivité en fréquence dépend d'une résolution en fréquence Δf de la transformée de Fourier discrète. Cette résolution en fréquence est définie par Δf= Fe / Nb où Fe est une fréquence d'échantillonnage à laquelle le signal GNSS est échantillonné par le convertisseur analogique numérique, Nb est le nombre d'échantillons du signal GNSS sur lequel est réalisée la transformée de Fourier discrète.

Comparativement à un filtre à réponse impulsionnelle finie (en anglais, « *Finite Impulse Response* », (FIR)), le filtrage dans le domaine fréquentiel est plus performant car la transition entre la bande passante et la bande non passante se fait à la résolution Δf près. De plus, le filtrage fréquentiel permet de supprimer intégralement des composantes fréquentielles par rapport au filtre FIR et d'annuler complétement la bande non passante, alors que le filtre FIR temporel se contente uniquement de l'atténuer.

La figure 4 illustre un tel filtrage par un filtre coupe-bande. Il consiste à supprimer les bandes de fréquences centrées sur les bandes L1 (1575,42 MHZ) et L2 (1227,6 MHz) qui permettent la transmission des signaux GPS code C/A et P(Y). La présence fréquente d'interférences dans ces bandes de fréquences rend l'atténuation de ces bandes de fréquences particulièrement avantageuse. La courbe de gauche représente le signal GPS avec les interférences et la courbe de droite représente le signal de la courbe de gauche filtré.

Ensuite, la transposition en fréquence (étape 105) du signal fréquentiel filtré est réalisée par décalage, autour de la fréquence nulle (0Hz), des composantes du signal fréquentiel filtré. L'incertitude maximale en fréquence est de ± Δf /2 et donc la transposition en fréquence est réalisée à un pas de ± Δf /2.

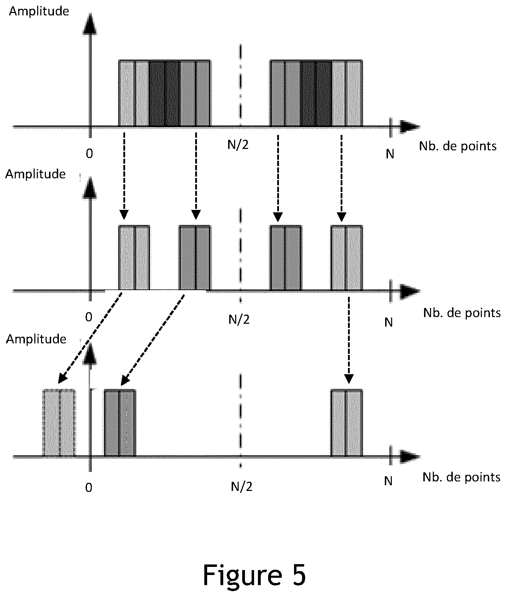

La figure 5 illustre l'effet du filtrage (étape 104) et de la transposition (étape 105) sur le signal fréquentiel atténué. Le graphique du haut représente le signal fréquentiel traité, le graphique du milieu représente le signal filtré après application d'un filtre coupe-bande quatre blocs fréquentiels ont été supprimés), le graphique du bas représente le signal transposé (étape 105). Sur cette figure, les flèches en traits pointillés indiquent les blocs fréquentiels identiques.

Enfin, le signal ainsi transposé est converti (étape 106) au moyen d'une transformée de Fourier inverse permettant d'obtenir le signal temporel en bande de base. Si les composantes du signal fréquentiel en bande de base ne sont pas symétriques autour de la fréquence 0Hz, alors le signal temporel en bande de base est complexe. Si les composantes du signal fréquentiel en bande de base sont symétriques autour de la fréquence 0Hz, alors le signal temporel en bande de base est réel.

Un signal S' est alors obtenu. C'est ce signal qui permet ensuite d'obtenir le signal de navigation S".

On comprend que le traitement peut être réalisé par blocs traités indépendamment les uns des autres par les différentes étapes du procédé de traitement afin d'obtenir une pluralité de blocs contenant plusieurs signaux traités. En effet l'ensemble des traitements tels que décrits ici peuvent être mis en œuvre de manière équivalente sur l'intégralité du signal GNSS numérisé ou sur un bloc du signal GNSS numérisé. A l'issue du procédé, les échantillons des différents blocs du signal temporel en bande de base sont concaténés, afin d'obtenir le signal temporel en bande de base.

## Revendications

1. Procédé de traitement d'un signal de radionavigation issu d'au moins un satellite, ledit procédé comprenant les étapes suivantes mises en œuvre dans une unité de traitement (2) d'un récepteur (1) de radionavigation:
- conversion (102) du signal de radionavigation dans le domaine fréquentiel au moyen d'une transformée de Fourier de manière à obtenir un signal de radionavigation fréquentiel comprenant plusieurs composantes fréquentielles ;
- traitement (103) du signal de radionavigation fréquentiel de manière à traiter au moins une composante fréquentielle dite composante interférente, ladite composante ainsi traitée ayant été soit atténuée soit annulée ;
- filtrage (104) du signal de radionavigation fréquentiel numérique ainsi traité au moyen d'un filtre coupe-bande pour obtenir un signal de radionavigation fréquentiel filtré ;
- transposition (105) en fréquence du signal de radionavigation fréquentiel filtré afin d'obtenir un signal de radionavigation fréquentiel en bande de base ;
- conversion (106) du signal de radionavigation fréquentiel en bande de base au moyen d'une transformée de Fourier inverse de manière à obtenir un signal de radionavigation en bande de base temporel dans lequel des interférences ont été atténuées/supprimées.

2. Procédé de traitement selon la revendication 1, dans lequel, le traitement visant à obtenir un signal de radionavigation fréquentiel traité comprend une excision de fréquence.

3. Procédé de traitement selon l'une des revendications 1 à 2, dans lequel le filtrage (104) du signal fréquentiel traité consiste à annuler l'amplitude de composantes fréquentielles excisées associées à des fréquences appartenant à une bande de fréquence à filtrer.

4. Procédé de traitement selon l'une des revendications 1 à 3, dans lequel la transposition (105) en fréquence est réalisée par décalage des composantes du signal fréquentiel numérique filtré autour de la fréquence 0Hz.

5. Procédé de traitement selon l'une des revendications 1 à 4, le signal de radionavigation étant découpé en une pluralité de blocs d'échantillons ; les étapes de conversion (102) au moyen de la transformée de Fourier discrète, de traitement (103), de filtrage (104), de transposition (105) et de conversion (106) au moyen de transformée de Fourier discrète inverse sont réalisées indépendamment pour chaque bloc d'échantillons du signal de radionavigation afin d'obtenir des blocs d'échantillons du signal temporel en bande de base dont une ou plusieurs composantes fréquentielles ont été traitées.

6. Récepteur (1) de radionavigation comprenant une unité (11) de réception configurée pour obtenir un signal de radionavigation, ledit récepteur comprenant une unité (2) de traitement configurée pour mettre en œuvre un procédé selon l'une des revendications précédentes.

7. Aéronef comprenant un récepteur selon la revendication 6.

8. Produit programme d'ordinateur comprenant des instructions de code de programme pour l'exécution des étapes d'un procédé selon l'une des revendications 1 à 5, lorsque ce programme est exécuté par un ordinateur.

## Patentansprüche

1. Verfahren zur Verarbeitung eines Funknavigationssignals, das von mindestens einem Satelliten ausgeht, wobei das Verfahren die folgenden Schritte umfasst, die in einer Verarbeitungseinheit (2) eines Funknavigationsempfängers (1) durchgeführt werden:
- Umwandeln (102) des Funknavigationssignals in den Frequenzbereich mittels einer Fourier-Transformation, um ein Frequenz-Funknavigationssignal zu erhalten, das mehrere Frequenzkomponenten umfasst;
- Verarbeiten (103) des Frequenz-Funknavigationssignals, um mindestens eine Frequenzkomponente, bezeichnet als Interferenzkomponente, zu verarbeiten, wobei die derart verarbeitete Komponente entweder gedämpft oder aufgehoben wurde;
- Filtern (104) des derart verarbeiteten digitalen Frequenz-Funknavigationssignals mittels eines Bandsperrfilters, um ein gefiltertes Frequenz-Funknavigationssignal zu erhalten;
- Frequenzumsetzen (105) des gefilterten Frequenz-Funknavigationssignals, um ein Frequenz-Funknavigationssignal im Basisband zu erhalten;
- Umwandeln (106) des Frequenz-Funknavigationssignals im Basisband mittels einer inversen Fourier-Transformation, um ein zeitbasiertes Funknavigationssignal im Basisband zu erhalten, in dem Interferenzen gedämpft/unterdrückt wurden.

2. Verarbeitungsverfahren nach Anspruch 1, wobei die Verarbeitung, die darauf abzielt, ein verarbeitetes Frequenz-Funknavigationssignal zu erhalten, eine Frequenzausblendung umfasst.

3. Verarbeitungsverfahren nach einem der Ansprüche 1 bis 2, wobei die Filterung (104) des verarbeiteten Frequenzsignals darin besteht, die Amplitude ausgeblendeter Frequenzkomponenten aufzuheben, die Frequenzen zugeordnet sind, die zu einem zu filternden Frequenzband gehören.

4. Verarbeitungsverfahren nach einem der Ansprüche 1 bis 3, wobei die Frequenzumsetzung (105) durch Versatz der Komponenten des gefilterten digitalen Frequenzsignals um die Frequenz 0 Hz herum erfolgt.

5. Verarbeitungsverfahren nach einem der Ansprüche 1 bis 4, wobei das Funknavigationssignal in eine Vielzahl von Tastwertblöcken zerlegt wird; die Schritte der Umwandlung (102) mittels diskreter Fourier-Transformation, der Verarbeitung (103), der Filterung (104), der Umsetzung (105) und der Umwandlung (106) mittels inverser diskreter Fourier-Transformation für jeden Tastwertblock des Funknavigationssignals unabhängig durchgeführt werden, um Tastwertblöcke des Zeitsignals im Basisband zu erhalten, von denen eine oder mehrere Frequenzkomponenten verarbeitet wurden.

6. Funknavigationsempfänger (1), umfassend eine Empfangseinheit (11), die zum Erhalten eines Funknavigationssignals ausgelegt ist, wobei der Empfänger eine Verarbeitungseinheit (2) umfasst, die zum Ausführen eines Verfahrens nach einem der vorhergehenden Ansprüche ausgelegt ist.

7. Flugzeug, umfassend einen Empfänger nach Anspruch 6.

8. Rechnerprogrammprodukt, das Programmcodeanweisungen zum Ausführen der Schritte eines Verfahrens nach einem der Ansprüche 1 bis 5 umfasst, wenn dieses Programm von einem Rechner ausgeführt wird.

## Claims

1. Method of processing a radionavigation signal from at least one satellite, said method comprising the following steps implemented in a processing unit (2) of a radionavigation receiver (1):
- converting (102) a radionavigation signal in the frequency domain by means of a Fourier transform so as to obtain a frequency radionavigation signal comprising several frequency components;
- processing (103) the frequency-domain radionavigation signal so as to process at least one frequency component known as the interfering component, the said component thus processed having been either attenuated or cancelled;
- filtering (104) the digital frequency radionavigation signal thus processed by means of a notch filter to obtain a filtered frequency radionavigation signal;
- frequency transposition (105) of the filtered frequency radionavigation signal in order to obtain a baseband frequency radionavigation signal;
- converting (106) the baseband frequency radionavigation signal by means of an inverse Fourier transform so as to obtain a time baseband radionavigation signal in which interference has been attenuated/removed.

2. Method of processing according to claim 1, in which the processing to obtain a processed frequency radionavigation signal comprises frequency excision.

3. Method of processing according to one of claims 1 to 2, in which the filtering (104) of the processed frequency signal consists in cancelling the amplitude of excised frequency components associated with frequencies belonging to a frequency band to be filtered.

4. Method of processing according to one of claims 1 to 3, in which the frequency transposition (105) is performed by shifting the components of the filtered digital frequency signal around the frequency 0Hz.

5. Method of processing according to one of claims 1 to 4, the radionavigation signal being split into a plurality of sample blocks; the steps of conversion (102) by means of the discrete Fourier transform, processing (103), filtering (104), transposition (105) and conversion (106) by means of the inverse discrete Fourier transform are carried out independently for each block of samples of the radionavigation signal in order to obtain blocks of samples of the baseband time signal of which one or more frequency components have been processed.

6. Radio navigation receiver (1) comprising a receiving unit (11) configured to obtain a radio navigation signal, said receiver comprising a processing unit (2) configured to implement a method according to one of the preceding claims.

7. An aircraft comprising a receiver according to claim 6.

8. A computer program product comprising program code instructions for executing the steps of a method according to any one of claims 1 to 5, when that program is executed by a computer.
